# EUROPEAN PATENT SPECIFICATION

(11) **EP 0 263 747 B1**
(45) Date of publication and mention of the grant of the patent: **04.08.1993**
(21) Application number: 87402183.5
(22) Date of filing: 30.09.1987
(51) Int. Cl.: C23C 30/00

(54) **Surface coated tungsten carbide-base sintered hard alloy material for inserts of cutting tools**
Oberflächenbeschichteter gesinterter Hartmetallegierungswerkstoff auf Wolframkarbid-Basis für Schneidwerkzeugeinsätze
Alliage dur fritté à base de carbure de tungstène à surface revêtue pour inserts d'outils de coupe

(30) Priority: 03.10.1986 JP 235726/86
(43) Date of publication of application: 13.04.1988
(73) Proprietor: MITSUBISHI MATERIALS CORPORATION, Chiyoda-ku Tokyo (JP)
(72) Inventor: Okada, Yoshikazu, Nishihinagawa 1cho., Shinagawa-ku, Tokyo (JP); Sugawara, Jun, Nishihinagawa 1cho., Shinagawa-ku, Tokyo (JP); Takizawa, Sumiyoshi, Nishihinagawa 1cho., Shinagawa-ku, Tokyo (JP)
(74) Representative: Hasenrader, Hubert

(56) References cited:
- US-A- 4 277 283
- US-A- 4 497 874
- PATENT ABSTRACTS OF JAPAN, vol. 9, no. 160 (C-289)[1883], 04 July 1985; & JP-A-60 33 353

## Description

### BACKGROUND OF THE INVENTION

This invention relates to surface coated tungsten carbide-base sintered hard alloy materials for inserts of cutting tools (hereinafter abbreviated as coated cutting tool materials), of which surfaces are coated with a hard layer, and more particularly to cutting tool materials of this kind which exhibit very excellent cutting performance by virtue of excellent wear resistance and toughness thereof, when used not only in continuous cutting of steel but also in intermittent cutting of same.

Conventionally, there have been widely employed coated cutting tool materials formed of tungsten carbide(WC)-base sintered hard alloys. Coated cutting tool materials of this kind are typically produced by preparing as starting powders (Ti, W)C powder, TiC powder, NbC powder, TaC powder, (Ti, Nb)C powder, WC powder, and Co powder, etc., then blending them into a predetermined composition, kneading the blended powder into a mixed powder, compressing the mixed powder into a green compact, and sintering the green compact for 1 - 2 hours in a vacuum atmosphere under a pressure of 13,33Pa or less and at a temperature within a range from 1300 to 1500 °C. The resulting cutting tool materials have substrates consisting essentially of: 5 - 30 percent by weight (hereinafter percentages are weight percentages throughout the whole specification) one composite metal carbide, as a component forming a hard disperse phase, selected from the group consisting of (Ti, W)C, (Ti, Nb, W)C, (Ti, Ta, W)C, and (Ti, Nb, Ta, W)C; 4 - 10 percent Co as a component forming a binder phase; and the balance of WC as another component forming the hard disperse phase and inevitable impurities. Each substrate is coated, by an ordinary coating method such as a chemical vapor deposition method or a physical vapor deposition method, with a hard coating layer composed of an inner layer consisting essentially of TiC and having a mean layer thickness of 2 - 8 µm, and an outer layer formed by a single layer of one component or a double layer of two compounds selected from the group consisting of TiCO, TiCNO, and Al₂O₃ and having a mean layer thickness of 0.3 - 3 µm.

Although cutting tools formed of the above conventional coated cutting tool materials exhibit excellent wear resistance when used in continuous cutting of steel, their cutting edges are liable to be chipped when used in intermittent cutting of steel due to insufficient toughness of their substrates, and hence the conventional cutting tools have rather short lives.

### SUMMARY OF THE INVENTION

It is the object of the invention to provide surface coated tungsten carbide-base sintered hard alloy materials for inserts of cutting tools which possess excellent wear resistance and toughness, and therefore can exhibit excellent cutting performance when used in continuous cutting of steel as well as intermittent cutting of same.

The present invention provides a surface coated tungsten carbide-base sintered hard alloy material for inserts of cutting tools, comprising :
(1) a substrate formed of a tungsten carbide-base sintered hard alloy having an internal portion consisting essentially of :
   5 - 30 percent by weight of a composite metal carbo-nitride, as a compound forming a hard disperse phase, selected from the group consisting of (Ti, W) CN, (Ti, Nb, W) CN, (Ti, Tₐ , W)CN, and (Ti, Nb, Ta, W)CN ;
   4 - 10 percent by weight of Co as a component forming a binder phase ; and
   the balance of WC as a component forming said hard disperse phase and inevitable impurities ;
   said substrate having a surface portion formed with a Co-enriched layer with a Co content within a range from 5% to 30% by weight, which is higher than that in said internal portion of said substrate, said Co-enriched layer being substantially free of said composite metal carbo-nitride and having a mean thickness within a range of 5 to 30 µm ;
(2) a hard surface layer coated over the surface of said substrate, comprising
   - an innermost layer consisting essentially of Tic, and formed by coating, said innermost layer containing one of a W component and W and Co components diffused from said substrate and having a mean thickness within a range from 0.5 to 3 µm ;
   - a diffusion preventing layer formed by one of a single layer of one compound selected from the group consisting of TiCN and TiN, or a double layer of both of said compounds TiCN and TiN, said diffusion preventing layer preventing diffusion of one of said W component and said W and Co components and having a means thickness within a range from 0.5 to 3 µm ;
   - an inner layer consisting essentially of TiC and having a mean thickness within a range from 2 to 5 µm ;
   - an outer layer formed by one of a single layer of one compound selected from the group consisting of TiCO, TiCNO, and a double layer of two compounds selected from same, said outer layer having a mean thickness within a range from 0.3 to 3 µm ;
      said innermost layer, said diffusion preventing layer, said inner layer and said outer layer being superposed one upon another in the order mentioned.

### DETAILED DESCRIPTION

Under the aforestated circumstances, the present applicants have made many studies in order to improve the toughness of the substrates of the conventional surface coated hard alloy cutting tools. As a result, the applicants have reached the following findings:
(a) If (Ti, W)CN powder, TiC powder, TiN powder, NbC powder, TaC powder, (Ta, Nb)C powder, WC powder, and Co powder, etc. are prepared as starting powders, then they are blended into a predetermined composition, with the powders containing N being essential blending powders, the blended powder is kneaded into a mixed powder, the mixed powder is compressed into a green compact, and the green compact is sintered for 1 - 2 hours in a vacuum atmosphere under a pressure of 13,33 Pa or less and at a temperature within a range from 1300 to 1500 °C, the resulting WC-base hard alloy has an internal portion consisting essentially of:
   5 - 30 percent one composite metal carbo-nitride, as a component forming a hard disperse phase, selected from the group consisting of (Ti, W)CN, (Ti, Nb, W)CN, (Ti, Ta, W)CN, and (Ti, Nb, Ta, W)CN;
   4 - 10 percent Co as a component forming a binder phase; and
   the balance of WC as another compound forming the hard disperse phase and inevitable impurities,
   and a surface portion formed with a Co-enriched layer of a predetermined depth from the surface, which is substantially free of the above composite metal carbo-nitride, and therefore, has a Co content of 5 - 30 percent higher than that in the internal portion, and a WC content substantially equal to that in the internal portion. The formation of the Co-enriched layer has been caused by the movement of the composite metal carbo-nitride in the inward direction during sintering in vacuum.
   The WC-base hard alloy has excellent toughness by virtue of the Co-enriched layer formed over the surface portion of the alloy.
   If the matrix of the WC-base hard alloy is coated with a hard surface layer formed of an inner layer consisting essentially of TiC, and an outer layer formed by a single layer of one compound selected from the group consisting of TiCO, TiCNO, and Al₂O₃, or a double layer of two compounds selected from same, the resulting coated cutting tool has excellent toughness.
(b) However, although a coated cutting tool material formed of the above-mentioned WC-base hard alloy having the Co-enriched layer over the surface portion thereof as its substrate, has improved toughness and therefore exhibits excellent cutting performance in intermittent cutting of steel, a W component or W and Co components are diffused from the Co-enriched layer into the TiC layer during the formation of the TiC layer as the inner layer, resulting in degraded overall wear resistance of the hard surface layer, whereby desired cutting performance cannot be obtained in continuous cutting of steel.
(c) If an innermost layer consisting essentially of TiC is coated over the surface of the WC-base hard alloy substrate having the Co-enriched layer over the surface portion thereof, then a single layer of one component or a double layer of two compounds selected from the group consisting of TiCN and TiN is coated over the innermost layer, and then an inner layer of TiC is coated over the single layer or the double layer, a W component or W and Co components from the surface portion of the substrate are diffused into the innermost layer, but the W component or W and Co components can be prevented from diffusion into the inner layer of TiC by virtue of the intervention of the TiCN layer and/or TiN layer between the innermost layer and the inner layer. Therefore, the TiC layer as the inner layer will be free of the W component or W/Co components, whereby the hard surface layer will have excellent wear resistance.

The present invention is based upon the above findings.

The surface coated WC-base sintered hard alloy material for an insert of a cutting tool according to the invention has the aformentioned composition and structure.

In the coated cutting tool materials according to the invention, the composition, layer thickness, etc. have been limited within the previously stated ranges for the following reasons:
(a) Composite Metal Carbo-nitride Content:
   Composite metal carbo-nitride contained in the substrate acts to enhance the heat resistance of the substrate. However, if the carbo-nitride content is less than 5 percent, desired heat resistance cannot be obtained. On the other hand, if the carbo-nitride content exceeds 30 percent, the toughness will be reduced. This is the reason why the carbo-nitride content has been limited within a range from 5 to 30 percent. Best results can be obtained if the same content is within a range from 5 to 20 percent.
(b) Co Content:
   Co contained in the substrate acts to enhance the toughness of the substrate. However, if the Co content is less than 4 percent, desired toughness cannot be obtained, while if it exceeds 10 percent, the resulting cutting tool tends to be easily deformed. This is the reason why the Co content has been limited within a range from 4 to 10 percent. Best results can be obtained if the same content is within a range from 5 to 8 percent.
(c) Depth of Co-enriched Layer:
   If the depth of the Co-enriched layer forming the surface portion of the substrate is less than 5 microns from the surface, desired toughness cannot be obtained; while if the depth exceeds 30 µm, it will result in degraded wear resistance. Therefore, the depth of the Co-enriched layer has been limited within a range from 5 to 30 µm. Best results can be obtained if the same mean thickness is within a range from 10 to 20 µm.
(d) Mean Thickness of Innermost Layer:
   The innermost layer contains W and Co diffused from the surface portion of the substrate, and acts to enhance the bond strength of the hard surface layer with which it is bonded to the surface of the substrate. However, if the mean thickness of the innermost layer is less than 0.5 µm, the above action cannot be performed to a desired extent, while if the mean thickness exceeds 3 µm no further increase in the bond strength can be obtained, and on the contrary the increased thickness of the innermost layer will impose a limitation on the thickness of the inner layer or the outer layer. Therefore, the mean thickness has been limited within a range from 0.5 to 3 µm. Best results can be obtained if the same mean thickness is within a range from 0.7 to 2 µm.
(e) Mean Thickness of Diffusion Preventing Layer:
   If the mean thickness of the diffusion preventing layer is less than 0.5 µm, desired diffusion preventing effect cannot be obtained, while if the mean thickness exceeds 3 µm, it will result in degraded wear resistance of the hard surface layer. Therefore, the mean thickness has been limited within a range from 0.5 to 3 µm. Best results can be obtained if the same mean thickness is within a range from 1 to 2.5 µm.
(f) Mean Thickness of Inner layer and Outer Layer:
   If either the mean thickness of the inner layer is less than 2 µm or that of the outer layer is less than 0.3 µm, desired wear resistance cannot be obtained, while if either the mean thickness of the inner layer exceeds 5 µm or that of the outer layer exceeds 3 µm, it will result in degraded chipping resistance of the hard surface layer. Therefore, the mean thickness of the inner layer has been limited within a range from 2 to 5 µm, and that of the outer layer within a range from 0.3 to 3 µm, respectively. Best results can be obtained if the same mean thicknesses are respectively within ranges from 3 to 4.5 µm for the inner layer and 0.5 to 2.5 µm for the outer layer.

Examples of the coated cutting tool materials according to the invention will now be described in detail.

### EXAMPLE

The following starting powders were prepared: powder of (Ti_{0.71}, W_{0.29})(C_{0.69}, N_{0.31}), powder of TiC, powder of TiN, powder of NbC, powder of TaC, and powder of (Ta_{0.83}, Nb_{0.17})C, each having a mean grain size of 1 µm, powder of WC having a mean grain size of 3.5 µm, and powder of Co having a mean grain size of 1.2 µm.

These starting powders were blended into compositions shown in Table 1. The blended powders were each kneaded in a wet-type ball mill into a mixed powder for 72 hours, the mixed powder was then dried, and compressed under a pressure of 10⁸Pa into a green compact having shape according to SNMG 120408 of ISO. The green compacts were sintered for 1.5 hours in a vacuum atmosphere under a pressure of 0,1333 Pa at a temperature of 1420 °C. Thus, substrates A - E of the coated cutting tool materials according to the invention were prepared, of which the internal portions have chemical compositions shown in Table 1, and surface portions have Co-enriched layers formed therein, the Co-enriched layers having Co contents at the layer central portions and mean depths from the surfaces of the substrates shown in Table 1, and being substantially free of composite metal carbo-nitride.

To produce comparative substrates of conventional coated cutting tool materials, the following starting

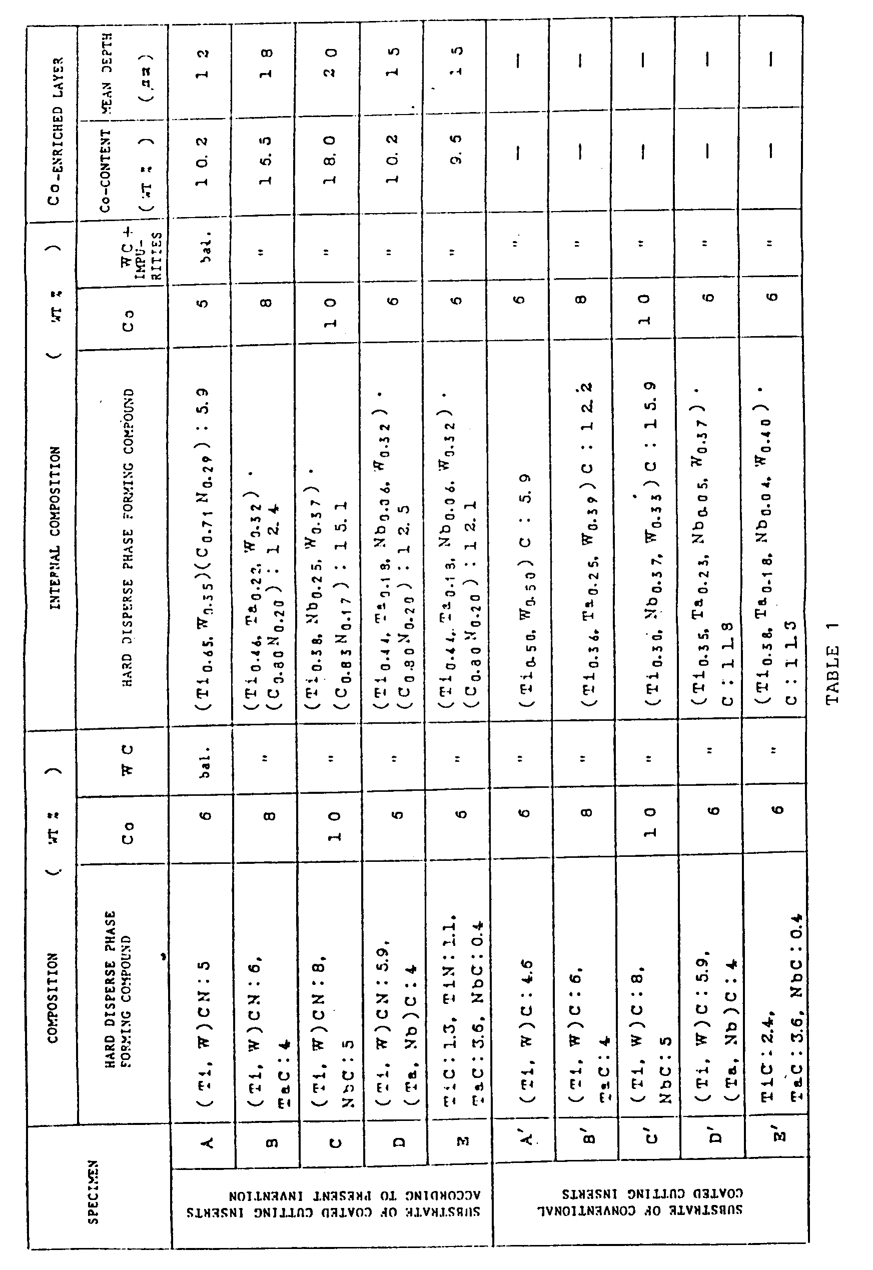

powders were prepared: powder of (Ti_{0.58}, W_{0.42})C, powder of TiC, powder of NbC, powder of TaC, and powder of (Ta_{0.83}, Nb_{0.17})C each having a mean grain size of 1 µm, powder of WC having a mean grain size of 3.5 µm, and powder of Co having a mean grain size of 1.2 µm.

These powders were blended into compositions shown in Table 1, and the blended powders were processed under the same manufacturing conditions as those applied to the substrates A - E according to the present invention, whereby substrates A' - E' of conventional coated cutting tool materials were prepared, of which the internal portions have chemical compositions shown in Table 1, and which have homogeneous structures throughout the surface portions and internal portions.

Thereafter, the surfaces of the respective substrates thus obtained were coated with hard surface layers having respective chemical compositions and mean thicknesses shown in Table 2 by the ordinary chemical vapor deposition method, to thereby prepare coated cutting tool materials according to the invention Nos. 1 - 6, conventional coated cutting tool materials Nos. 1 - 6, and comparative coated cutting tool materials Nos. 1 - 3 which have neither innermost layer nor diffusion preventing layer.

Then, the above coated cutting tool materials were subjected to a test of continuous dry cutting of steel (hereinafter referred to as the cutting test A) under the following conditions:
- Work Material:: Round Bar according to SNCM 439 (hardness: HB 260)
- Cutting Speed:: 200m per minute;
- Feed Rate:: 0.3 mm per rev.;

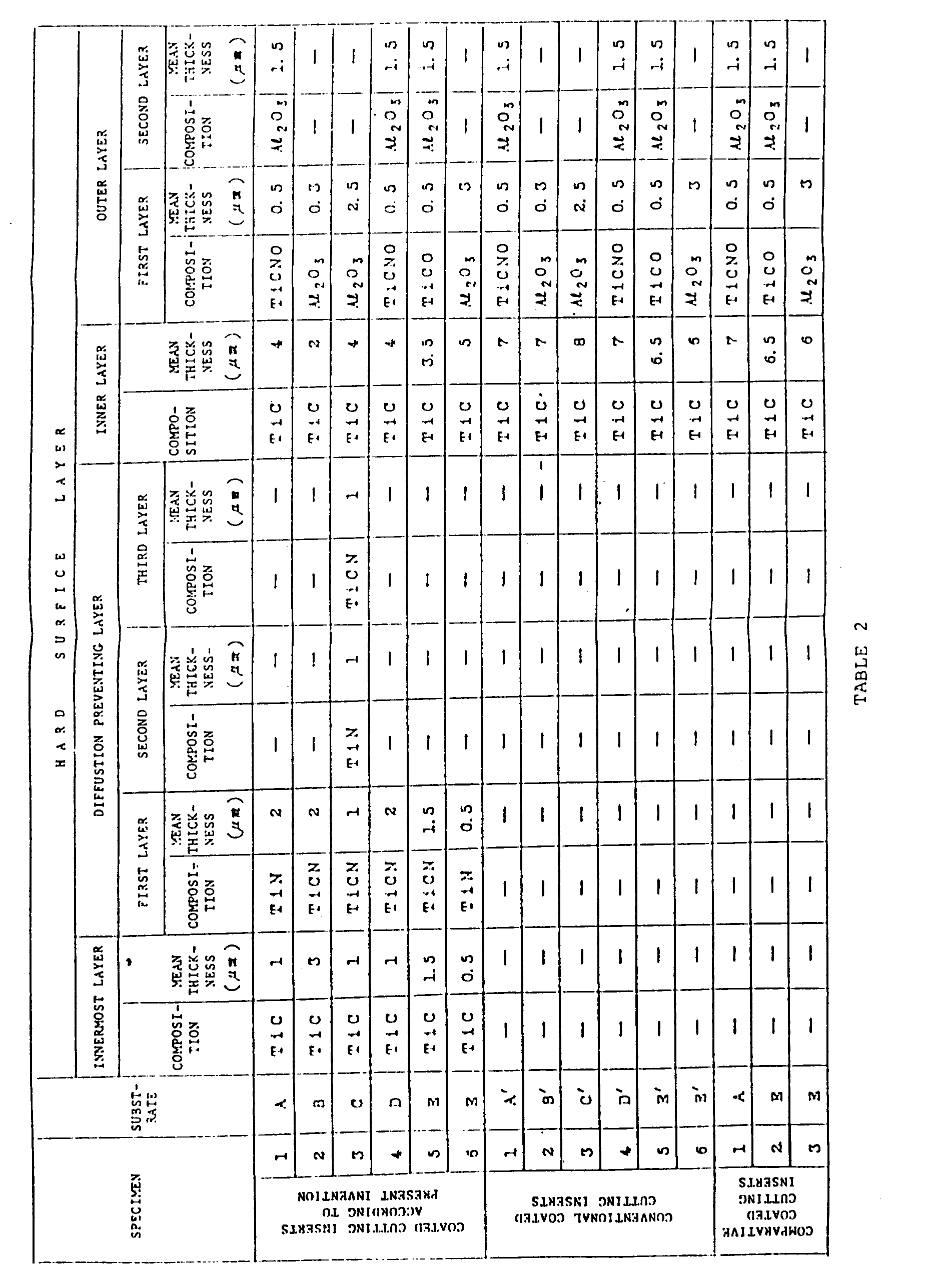

- Depth of Cut:: 1.5 mm;
- Cutting Time:: 15 minutes
The above cutting tool materials were also subjected to another test of continuous dry cutting of steel (hereinafter referred to as the cutting test B) under the following conditions:
- Work Material:: Round Bar according to SNCM 439 (hardness: HB 280)
- Cutting Speed:: 140 m per minute;
- Feed Rate:: 0.4 mm per rev.;
- Depth of Cut:: 2 mm;
- Cutting Time:: 15 minutes
The above cutting tool materials were further subjected to a test of intermittent dry cutting of steel (hereinafter referred to as cutting test C) under the following conditions:
- Work Material:: Round Bar with 4 grooves according to SNCM 439 (hardness: HB 310)
- Cutting Speed:: 140 m per minute;
- Feed Rate:: 0.25 mm per rev.;
- Depth of Cut:: 2 mm
In the above cutting tests A and B, the flank wear of each cutting insert was measured, while in the above cutting test C, cutting time before each cutting insert was chipped was measured. The results of the measurements are shown in Table 3 as an average value of every ten cutting inserts.

It will be learned from Table 3 that the coated cutting tool materials Nos. 1 - 6 according to the invention possess excellent toughness by virtue of their Co-enriched layers formed over the surface portions of

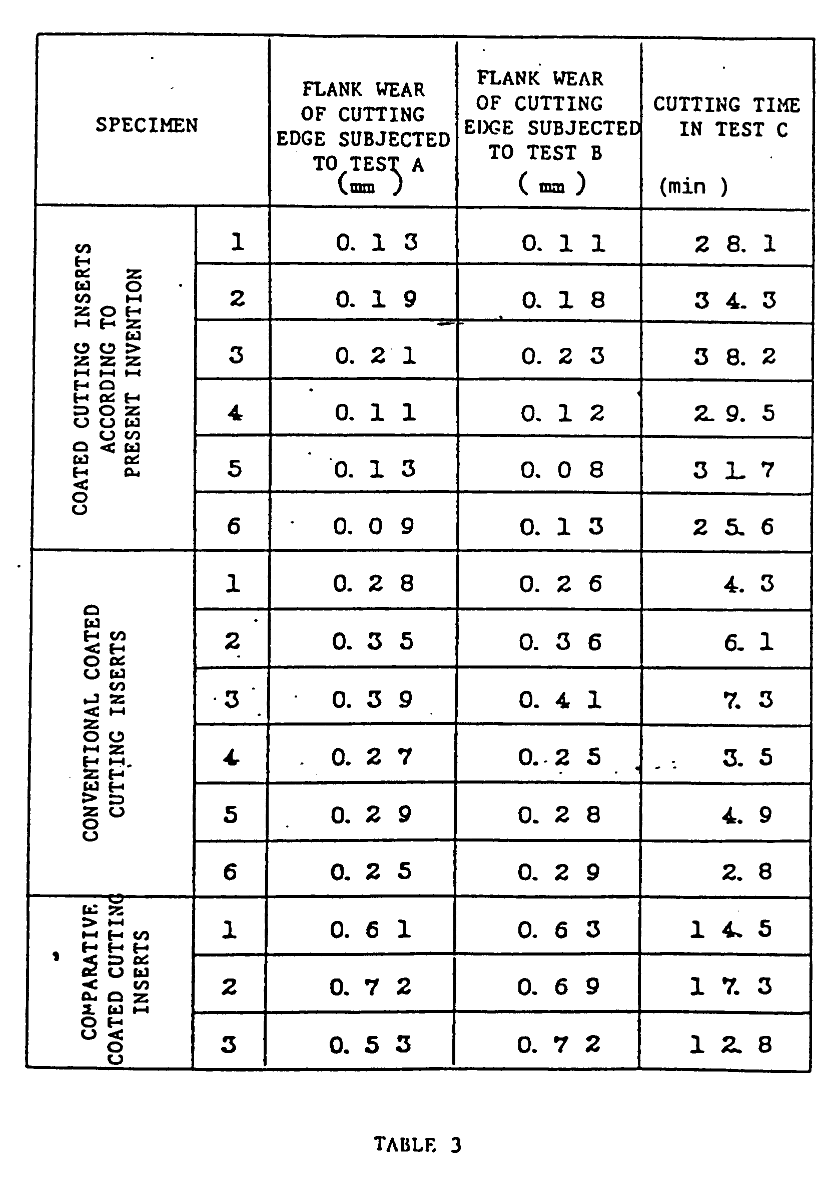

the substrates, as well as excellent wear resistance by virtue of their inners layer and outer layers which are free of W and Co, whereby excellent cutting performance was exhibited in both the continuous cutting of steel and the intermittent cutting of same. On the other hand, although the conventional coated cutting tool materials Nos. 1 - 6 exhibit somewhat excellent cutting performance in the continuous cutting of steel, they showed short service lives in the intermittent cutting of steel, since their substrate structures are homogeneous throughout the surface portions and internal portions and hence have insufficient toughness. Further, although the comparative coated cutting tool materials Nos. 1 - 3 have such sufficient toughness that they exhibited excellent cutting performance in the intermittent cutting of steel, they showed remarkable wear when used in the continuous cutting of steel, since their hard surface layers had neither innermost layer nor diffusion preventing layer so that W and Co components were diffused from the Co-enriched layer into the inner layer during formation of the latter.

As stated above, the coated cutting tool materials according to the invention have both excellent wear resistance and toughness, and therefore can exhibit excellent cutting performance not only when used in continuous cutting of steel but also when used in intermittent cutting of same.

## Claims

1. A surface coated tungsten carbide-base sintered hard alloy material for an insert of a cutting tool, comprising:
(a) a substrate formed of a tungsten carbide base sintered hard alloy having an internal portion consisting essentially of:
- 5% to 30% by weight of a composite metal carbo-nitride, as a compound forming a hard disperse phase, selected from the group consisting of (Ti, W)CN, (Ti, Nb, W)CN,(Ti, Ta, W)CN and (Ti, Nb, Ta, W)CN;
- 4% to 10% by weight of Co as a component forming a binder phase; and,
- the balance of WC as a component forming said hard disperse phase and inevitable impurities;
- said substrate having a surface portion formed with a Co-enriched layer with a Co content within a range from 5% to 30% by weight, which is higher than that in said internal portion of said substrate, said Co-enriched layer being substantially free of said composite metal carbo-nitride and having a mean thickness within a range from 5 to 30 µm:
(b) a hard surface layer coated over the surface of said substrate, comprising:
- an innermost layer consisting essentially of TiC and formed by coating, said innermost layer containing one of a W component and W and Co components diffused from said substrate and having a mean thickness within a range from 0.5 to 3 µm.
- a diffusion preventing layer formed by one of a single layer of one compound selected from the group consisting - of TiCN and TiN or a double layer of both of said compounds TiCN and TiN, said diffusion preventing layer preventing diffusion of one of said W component and said W and Co components and having a mean thickness within a range from 0.5 to 3 µm:
- an inner layer consisting essentially of TiC and having a mean thickness within a range from 2 to 5 µm.
- an outer layer formed by one of a single layer of one compound selected from the group consisting of TiCO, TiCNO,
and a double layer of two compounds selected from the same said outer layer having a mean thickness within range from 0.3 to 3µm.
said innermost layer, said diffusion preventing layer, said inner layer and said outer layer being superposed one upon another in the order mentioned.

2. A surface coated tungsten carbide-base sintered hard alloy metal as claimed in claim 1 wherein said outer layer is formed by a double layer of A1203 and one compound selected from the group consisting of TiCO and TiCNO.

## Patentansprüche

1. Oberflächenbeschichteter gesinterter Hartmetallegierungswerkstoff auf Wolframkarbid-Basis für einen Schneidwerkzeugeinsatz mit:
(a) einem Substrat, das aus einer gesinterten harten Legierung auf Wolframkarbid-Basis gebildet ist, mit einem Innenabschnitt, der im wesentlichen besteht aus:
- 5 bis 30 Gewichtsprozent eines zusammengesetzten metallischen Carbonitrids als eine Verbindung, die eine harte Dispersionsphase bildet, und aus der Gruppe bestehend aus (Ti, W)CN, (Ti, Nb, W)CN, (Ti, Ta, W)CN und (Ti, Nb, Ta, W)CN ausgewählt ist;
- 4 bis 10 Gewichtsprozent von Co als ein eine Bindephase bildender Bestandteil; und
- im übrigen aus WC als einem Bestandteil, der diese harte Dispersionsphase bildet sowie unvermeidlichen Verunreinigungen;
- wobei das Substrat einen Oberflächenabschnitt aufweist, der mit einer mit Co angereicherten Schicht mit einem Co-Anteil innerhalb eines Bereichs von 5 bis 30 Gewichtsprozent gebildet wird, der höher liegt als bei dem Innenabschnitt des Substrats, wobei die mit Co angereicherte Schicht im wesentlichen frei von dem zusammengesetzten metallischen Carbonitrid ist und eine durchschnittliche Dicke innerhalb eines Bereichs von 5 bis 30 µm hat:
(b) eine harte Oberflächenschicht, die über die Oberfläche des Substrats aufgetragen ist und aufweist:
- eine innerste Schicht, die im wesentlichen aus TiC besteht und durch Beschichtung gebildet ist, wobei die innerste Schicht eine W-Komponente bzw. W- und Co-Komponenten enthält, die aus dem Substrat diffundiert sind und eine durchschnittliche Dicke innerhalb eines Bereichs von 0,5 bis 3 µm haben.
- eine Diffusions-verhindernde Schicht, die durch eine Einzelschicht einer Verbindung, die aus der Gruppe bestehend aus TiCN und TiN ausgewählt ist, bzw. durch eine Doppelschicht dieser beiden Verbindungen TiCN und TiN gebildet ist, wobei die Diffusions-verhindernde Schicht die Diffusion der W-Komponente bzw. der W- und Co-Komponenten verhindert und eine durchschnittliche Dicke innerhalb eines Bereichs von 0,5 bis 3 µm aufweist:
- eine innere Schicht, die im wesentlichen aus TiC besteht und eine mittlere Dicke innerhalb eines Bereichs von 2 bis 5 µm hat;
- eine äußere Schicht, die von einer Einzelschicht einer Verbindung, die aus der Gruppe bestehend aus TiCO, TiCNO ausgewählt wird, gebildet wird, bzw.
eine Doppelschicht aus zwei Verbindungen, die aus derselben äußeren Schicht ausgewählt wird, mit einer durchschnittlichen Dicke innerhalb eines Bereichs von 0,3 bis 3 µm, wobei die innerste Schicht, die Diffusions-verhindernde Schicht, die innere Schicht und die äußere Schicht in der genannten Reihenfolge übereinander angeordnet sind.

2. Oberflächenbeschichtetes gesintertes Hartlegierungsmetall auf Wolframkarbid-Basis nach Anspruch 1 dadurch gekennzeichnet, daß die äußere Schicht durch eine Doppelschicht aus A1203 und eine aus der Gruppe bestehend aus TiCO und TiCNO ausgewählte Verbindung gebildet ist.

## Revendications

1. Matériau en alliage dur fritté à base de carbure de tungstène à surfaces revêtues destiné à une pièce d'insertion d'outils de coupe, comprenant :
(a) un substrat formé par un alliage dur fritté à base de carbure de tungstène ayant une partie interne consistant essentiellement en :
5 à 30 % en poids d'un carbonitrure métallique composite, en tant que composé formant une phase dispersée dure, choisi dans le groupe formé par (Ti, W) CN, (Ti, Nb, W) CN, (Ti, Ta, W)CN et (Ti, Nb, Ta, W)CN ;
4 à 10 % en poids de Co en tant que constituant formant une phase de liant ; et
en le complément constitué par WC en tant que constituant formant ladite phase dispersée dure et en des impuretés inévitables ;
ledit substrat ayant une partie superficielle constituée par une couche enrichie en Co ayant une teneur en Co située dans la plage de 5 % à 30 % en poids, qui est supérieure à celle de ladite partie interne dudit substrat, ladite couche enrichie en Co étant sensiblement exempte dudit carbonitrure métallique composite et ayant une épaisseur moyenne comprise dans la plage de 5 à 30 µm ;
(b) une couche superficielle dure appliquée sur la surface dudit substrat, comprenant :
- une couche la plus profonde consistant essentiellement en TiC et formée par revêtement, ladite couche la plus profonde contenant un constituant parmi un constituant W et des constituants W et Co diffusés depuis ledit substrat et ayant une épaisseur moyenne située dans la plage de 0,5 à 3 µm ;
- une couche antidiffusion formée par une couche unique d'un composé choisi dans le groupe formé par TiCN et TiN ou par une double couche de ces deux composés TiCN et TiN, ladite couche antidiffusion empêchant la diffusion de l'un des constituants parmi ledit constituant W et lesdits constituants W et Co et ayant une épaisseur moyenne située dans la plage de 0,5 à 3 µm ;
- une couche interne consistant essentiellement en TiC et ayant une épaisseur moyenne située dans la plage de 2 à 5 µm ;
- une couche externe formée par une couche unique d'un composé choisi dans le groupe formé par TiCO, TiCNO ou par une double couche de deux composés choisis parmi les mêmes, ladite couche externe ayant une épaisseur moyenne située dans la plage de 0,3 à 3 µm ;
ladite couche la plus profonde, ladite couche antidiffusion, ladite couche interne et ladite couche externe étant superposées dans l'ordre indiqué.

2. Matériau en alliage dur fritté à base de carbure de tungstène à surfaces revêtues selon la revendication 1, dans lequel ladite couche externe est formée d'une double couche de Al₂O₃ et d'un composé choisi dans le groupe formé par TiCO et TiCNO.
